# EUROPÄISCHE PATENTSCHRIFT

(11) **EP 0 510 141 B1**
(45) Veröffentlichungstag und Bekanntmachung des Hinweises auf die Patenterteilung: **28.06.1995**
(21) Anmeldenummer: 91918829.2
(22) Anmeldetag: 26.10.1991
(51) Int. Cl.: B60T 8/44, B60T 13/14

(54) **BREMSDRUCKSTEUERVORRICHTUNG FÜR EINE HYDRAULISCHE FAHRZEUGBREMSANLAGE**
BRAKE-PRESSURE CONTROL SYSTEM FOR VEHICLE HYDRAULIC BRAKES
DISPOSITIF DE COMMANDE DE LA PRESSION DE FREINAGE POUR UN SYSTEME DE FREINAGE HYDRAULIQUE POUR VEHICULES

(30) Priorität: 12.11.1990 DE 4035906
(43) Veröffentlichungstag der Anmeldung: 28.10.1992
(73) Patentinhaber: ALFRED TEVES GmbH, 60441 Frankfurt (DE)
(72) Erfinder: MAAS, Joachim, D-6368 Bad Vilbel (DE)
(86) Internationale Anmeldenummer: EP9102028
(87) Internationale Veröffentlichungsnummer: WO9208631

(56) Entgegenhaltungen:
- EP-A- 0 112 997
- EP-A- 0 168 286
- FR-A- 2 535 662
- FR-A- 2 565 183
- FR-E- 89 683

## Beschreibung

Die Erfindung betrifft eine Bremsdrucksteuervorrichtung für eine hydraulische Fahrzeugbremsanlage mit einer durch ein Bremspedal betätigbaren Ventilanordnung, durch die ein Druckmittelauslaß zum Anschließen eines Bremskreises wechselweise entweder mit einem Reservoir oder mit einer Druckquelle verbindbar ist.

Eine Bremsdrucksteuervorrichtung der angegebenen Art ist aus der US-PS 4705324 bekannt. Aufgabe derartiger Bremsdrucksteuervorrichtungen ist es, das von einer Druckquelle, beispielsweise einer Pumpe oder einem Druckspeicher, kommende, unter einem hohen Druck stehende Druckmittel nach Maßgabe einer am Bremspedal ausgeübten Betätigungskraft dosiert einem oder mehreren Bremskreisen zuzuführen, um eine dieser Betätigungskraft proportionale Bremswirkung an den Bremsen eines Fahrzeugs zu erzeugen. Bremsdrucksteuervorrichtungen dieser Art werden häufig in Bremsanlagen eingesetzt, die mit einer Bremsschlupfregeleinrichtung ausgerüstet sind, durch die das Blockieren der Fahrzeugräder während eines Bremsvorgangs verhindert wird. Bei der bekannten Bremsdrucksteuervorrichtung sind zur Erzielung einer Bremsschlupfregelung Magnetventile vorgesehen, die von einer elektronischen Antiblockierregeleinheit wahlweise betätigt werden, um den Bremskreis von dem Druckmittelauslaß zu trennen und mit dem Reservoir zu verbinden und dadurch eine Druckabsenkung im Bremskreis zu erzielen.

Durch zurückschalten der Magnetventile in die Ausgangsstellung wird der Bremskreis zum erneuten Druckaufbau wieder mit dem Druckmittelauslaß des BremsdrucksteuerventilS verbunden.

Der Erfindung liegt die Aufgabe zugrunde, eine Bremsdrucksteuervorrichtung der eingangs genannten Art zu schaffen, die ohne das Erfordernis zusätzlicher Magnetventile eine Steuerung des Bremsdrucks durch eine elektronische Regeleinrichtung ermöglicht.

Diese Aufgabe wird erfindungsgemäß dadurch gelöst, daß die Ventilanordnung unabhängig von der Betätigungsstellung des Bremspedals durch eine elektromagnetische Stellvorrichtung in eine Stellung bewegbar ist, in der der Druckmittelanschluß mit dem Reservoir verbunden ist. Bei der erfindungsgemäßen Bremsdrucksteuervorrichtung wird der Druckabbau im Bremskreis durch eine gegenüber dem Bremspedal vorrangige Betätigung der Ventilanordnung mit Hilfe eines Elektromagneten erreicht, dessen Erregung von einer elektronischen Bremsschlupfregeleinrichtung gesteuert werden kann. Es wird daher kein zusätzliches Steuerventil benötigt. Dies ermöglicht eine erhebliche Verringerung des Bauaufwands der Bremsanlage. Weiterhin wird die Ausfallsicherheit der Anlage erhöht, da eine zusätzlichemit dem Bremskreis in Verbindung stehende Ventildichtstelle entfällt.

In einer bevorzugten Ausgestaltung der Erfindung ist vorgesehen, daß zwischen der Ventilanordnung und dem Bremspedal eine Feder zur Übertragung der Ventilbetätigungskraft angeordnet ist und daß die Feder durch die elektromagnetische Stellvorrichtung über das Maß der Ventilbetätigungskraft hinaus spannbar ist. Diese Ausgestaltung ermöglicht einen einfachen Aufbau der erfindungsgemäßen Bremsdrucksteuervorrichtung, da der Kraftfluß vom Bremspedal zur Ventilanordnung bei elektromagnetischer Ansteuerung der Ventilanordnung nicht unterbrochen werden muß.

Erfindungsgemäß kann weiterhin vorgesehen sein, daß das Bremspedal mit einem aus dem Gehäuse der Bremsdrucksteuervorrichtung herausragenden Betätigungskolben verbunden ist, der in einer Bohrung einen über eine Druckfeder am Betätigungskolben abgestützten Ventilkolben der Ventilanordnung enthält und daß der Betätigungskolben von einem Elektromagneten umgeben ist, durch den der Ventilkolben gegen die Druckfeder bewegbar ist. Hierdurch wird mit Hilfe des Betätigungskolbens parallel zur Betätigung der Ventilanordnung ein Übertragungsweg für eine hohe Betätigungskraft geschaffen, mit der eine Notbetätigung der Bremse bei Ausfall der Energieversorgung möglich ist. Der Ventilkolben kann erfindungsgemäß druckausgeglichen sein, so daß die Ventilbetätigungskraft druckunabhängig bleibt. Nach einem weiteren Vorschlag der Erfindung kann der Betätigungskolben in einen mit dem Druckmittelauslaß verbundenen Druckraum hineinbewegbar sein, der über ein in Richtung auf die Druckquelle sperrendes Rückschlagventil mit der Druckquelle verbunden ist. Hierbei ist es zweckmäßig, wenn das die Druckmittelzufuhr zum Druckmittelauslaß ermöglichende Hochdruckventil der Ventilanordnung in einem Trennkolben angeordnet ist, der durch eine Druckfeder in einer dem Betätigungskolben benachbarten Endstellung gehalten wird und der bei geöffnetem Hochdruckventil gemeinsam mit dem Betätigungskolben in den Druckraum bewegbar ist.

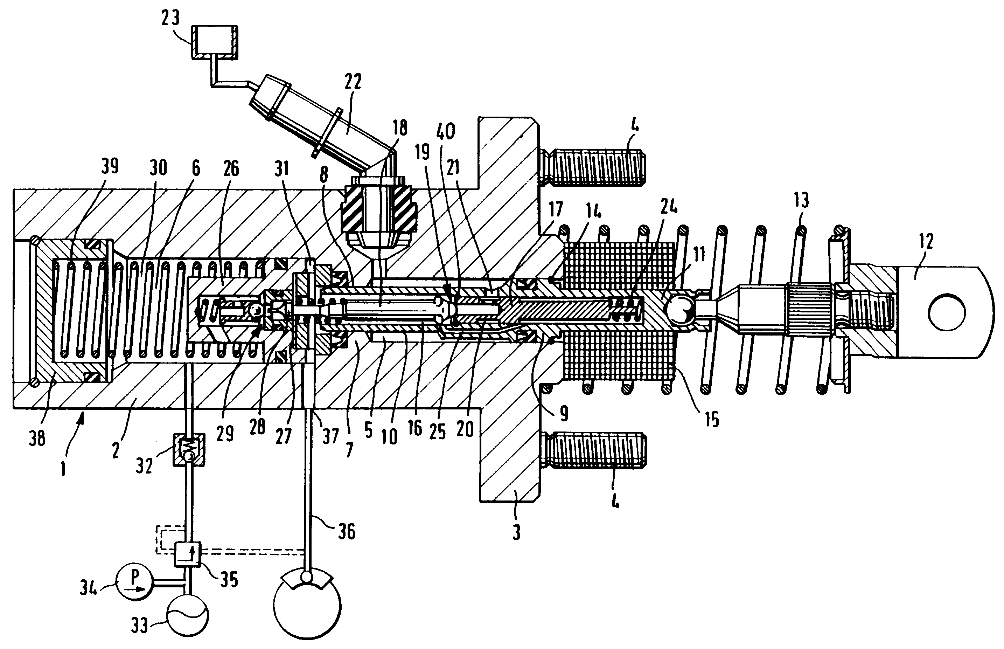

Ein Ausführungsbeispiel der Erfindung ist in der Zeichnung dargestellt und wird im folgenden näher beschrieben. Die Zeichnung zeigt einen Längsschnitt durch eine erfindungsgemäße Bremsdrucksteuervorrichtung mit einer schematischen Darstellung der Grundkomponenten einer an die Bremsdrucksteuervorrichtung angeschlossenen Bremsanlage.

Die dargestellte Bremsdrucksteuervorrichtung 1 besteht aus einem Gehäuse 2 mit einem Befestigungsflansch 3, der Gewindebolzen 4 aufweist, mit denen das Gehäuse 2 an der Karosserie eines Fahrzeugs festgeschraubt wird. Das Gehäuse 2 weist in Längsrichtung zwei koaxiale Zylinderbohrungen 5, 6 auf, die durch einen Wandabschnitt 7 voneinander getrennt sind. Der Wandabschnitt 7 ist von einer koaxialen Bohrung 8 durchdrungen, deren Durchmesser kleiner ist als der Durchmesser der Zylinderbohrungen 5, 6. In der Zylinderbohrung 5 befindet sich ein Betätigungskolben 9 mit einer in die Bohrung 8 eingreifenden Kolbenstufe 10 und einem aus der Zylinderbohrung 5 herausragenden, zylindrischen Ansatz 11, an dessen Ende eine Betätigungsstange 12 mit Hilfe eines Kugelgelènks befestigt ist, die mit einem Bremspedal verbunden wird. Durch eine Druckfeder 13, die an dem Befestigungsflansch 3 und an einem auf der Betätigungsstange 12 angeordneten Federteller abgestützt ist, wird der Betätigungskolben 9 an einen in der Zylinderbohrung 5 vorgesehenen Anschlagring 14 gedrückt. Der Ansatz 11 ist von einem Elektromagneten 15 umgeben, der vor der Öffnung der Zylinderbohrung 5 am Gehäuse 2 befestigt ist.

Im Betätigungskolben 9 ist eine zentrale Längsbohrung 16 ausgebildet, in der ein Ventilkolben 17 und ein Ventilstößel 18 hintereinander angeordnet sind. Das dem Ventilstößel 18 benachbarte Ende des Ventilkolbens 17 weist einen ringförmigen Ventilsitz auf, der durch eine am Ventilstößel 18 befestigte Ventilkugel verschließbar ist. Hierdurch bilden der Ventilkolben 17 und der Ventilstößel 18 miteinander ein Niederdruckventil 19. Das Niederdruckventil 19 ist durch Bohrungen innerhalb des Ventilkolbens 17 mit einer Ringnut 20 verbunden, die zwischen zwei gegenüber der Längsbohrung 16 abgedichteten Bereichen der Mantelfläche des Ventilkolbens 17 ausgebildet ist. Die Ringnut 20 ist über eine Radialbohrung 21 im Betätigungskolben 9 mit der Zylinderbohrung 5 verbunden, die über einen Niederdruckanschluß 22 mit einem Reservoir 23 in Verbindung steht. Das dem Ventilstößel 18 abgekehrte Ende des Ventilkolbens 17 erstreckt sich bis in den Ansatz 11 des Betätigungskolbens 9 und bildet einen Anker, an dem bei Erregung des Elektromagneten 15 eine zur Betätigungsstange 12 gerichtete Magnetkraft wirksam wird. Zwischen dem Ende des Ventilkolbens 17 und dem Boden der Längsbohrung 16 ist eine Druckfeder 24 angeordnet. Der die Druckfeder 24 enthaltende Abschnitt der Längsbohrung 16 ist durch einen in der Wand des Betätigungskolbens 9 ausgebildeten Kanal 25 mit dem vorderen, den Ventilstößel 18 enthaltenden Bereich der Längsbohrung 16 verbunden, so daß der Ventilkolben 17 druckausgeglichen ist. Ein Sicherungsring 40 hält den Ventilkolben 17 in einem geringen Abstand von der Ventilkugel des Ventilstößels 18.

Das dem Niederdruckventil 19 abgekehrte Ende des Ventilstößels 18 ist in einem Trennkolben 26 axial verschiebbar gehalten, der in der Zylinderbohrung 6 angeordnet ist. Hierzu weist der Trennkolben 26 einen in eine Einschnürung im Ventilstößel 18 eingreifende Anschlagscheibe 27 auf, gegen die der Kopf 28 des Ventilstößels 18 von einer den Ventilstößel 18 umgebenden und an der Anschlagscheibe 27 abgestützen Druckfeder gedrückt wird. An dem Kopf 28 ist ein nadelartiger Stößel angeordnet, mit dem das durch eine Kugel gebildete Verschlußelement eines im Trennkolben 26 angeordneten Hochdruckventils 29 in Offenstellung bewegt werden kann. In seiner Offenstellung verbindet das Hochdruckventil 29 die durch den Trennkolben 26 voneinander getrennten, eine Einlaßkammer 30 und eine Auslaßkammer 31 bildenden Bereiche der Zylinderbohrung 6. Die Einlaßkammer 30 ist über ein Rückschlagventil 32 mit einem Druckspeicher 33 und der Druckseite einer Pumpe 34 verbunden. Zwischen das Rückschlagventil 32 und den Druckspeicher 33 bzw. die Pumpe 34 ist ein Druckminderventil 35 geschaltet, welches den Druck in der Eingangskammer 30 auf einen vorgegebenen, vom Druck in einem Bremskreis 36 abhängigen und gegenüber diesem höheren Wert begrenzt. Der Bremskreis 36 ist an einen Druckmittelauslaß 37 der Auslaßkammer 31 angeschlossen.

Zwischen den Trennkolben 26 und einem die Zylinderbohrung 6 verschließenden Deckel 38 ist eine Druckfeder 39 angeordnet, die den Trennkolben 26 in Anlage an dem Wandabschnitt 7 hält.

Die Bremsdrucksteuervorrichtung 1 ist in der Zeichnung in der Ruhelage dargestellt, in der die an den Bremskreis 36 angeschlossenen Bremsen nicht betätigt sind. In dieser Lage ist das Niederdruckventil 19 geöffnet, so daß der Bremskreis 36 über die Auslaßkammer 31, die Längsbohrung 16, die Radialbohrung 21, die Zylinderbohrung 5 und den Niederdruckanschluß 22 mit dem Reservoir 23 verbunden ist. Das Hochdruckventil 29 ist geschlossen und in der Einlaßkammer 30 herrscht der von dem Druckminderventil 35 gesteuerte Druck, der ca. 30 bar beträgt.

Zur Einleitung eines Bremsvorganges wird der Betätigungskolben 9 in die Zylinderbohrung 5 hineinbewegt. Diese Bewegung wird über die Druckfeder 24 auch auf den Ventilkolben 17 übertragen, wodurch das Niederdruckventil 19 geschlossen und die Auslaßkammer 31 von dem Reservoir 23 getrennt wird. Nach dem Schließen des Niederdruckventils 19 wird die Bewegung des Betätigungskolbens 9 auch auf den Stößel 18 übertragen, so daß dieser nach einem weiteren kurzen Betätigungshub das Hochdruckventil 29 öffnet. Hierdurch gelangt das unter Druck stehende Druckmittel aus der Einlaßkammer 30 in die Auslaßkammer 31 und bewirkt dort sowie in dem daran angeschlossenen Bremskreis 36 einen Druckanstieg, durch den die Bremsen betätigt werden. Entsprechend dem Druckanstieg im Bremskreis 36 wird durch die Steuerfunktion des Druckminderventils 35 auch der Druck in der Einlaßkammer 30 erhöht, so daß die bereits zu Beginn des Betätigungsvorgangs vorhandene Druckdifferenz von ca. 30 bar bestehen bleibt. Der Druck in der Auslaßkammer 31 ist auch auf der in der Bohrung 8 gedichteten Querschnittsfläche des Betätigungskolbens 9 wirksam und erzeugt eine gegen die Betäbigungsstange 12 gerichtete Reaktionskraft, die den Verlauf des Beätigungsvorgangs am Bremspedal fühlbar macht. Ist der gewünschte Bremsdruck im Bremskreis 36 erreicht, so wird der Betätigungskolben 9 durch die Reaktionskraft soweit in Richtung auf die Betätigungsstange 12 zurückbewegt, bis das Hochdruckventil 29 geschlossen ist. Der in der Auslaßkammer 31 und im Bremskreis 36 herrschende Druck bleibt dann konstant, solange die Reaktionskraft und die Betätigungskraft im Gleichgewicht sind.

Wird während eines Bremsvorgangs durch eine mit der Bremsdrucksteuervorrichtung 1 zusammenwirkende Bremsschlupfregeleinrichtung der Elektromagnet 15 durch eine Spannung erregt, so wird der Ventilkolben 17 gegen die Kraft der Druckfeder 24 in Richtung auf die Betätigungsstange 12 bewegt und das Niederdruckventil 19 geöffnet, während das Hochdruckventil 29 geschlossen bleibt. Hierdurch kann Druckmittel aus dem Bremskreis 36 zum Reservoir 23 abfließen, wodurch eine Druckabsenkung im Bremskreis 36 erfolgt. Da die Reaktionskraft hierbei abnimmt, verschiebt sich der Betätigungskolben 9 nach links, bis er an dem Trennkolben 26 zur Anlage kommt, der die Betätigungskraft abstützt. Wird die Spannung am Elektromagneten 15 wieder abgeschaltet, so wird der Ventilkolben 17 durch die Druckfeder 24 wieder in Betätigungsrichtung verschoben, wodurch zunächst das Niederdruckventil 19 geschlossen und anschließend das Hochdruckventil 29 wieder geöffnet wird. Hierdurch kann erneut Druckmittel in den Bremskreis 36 einströmen, wodurch der Bremsdruck wieder auf das durch die Betätigungskraft vorgegebene Maß ansteigt. Durch intermittierendes Ansteuern des Elektomagneten 15 läßt sich auf diese Weise ohne zusätzliche Ventile eine automatische Regelung des Bremsdrucks im Bremskreis 36 herbeiführen.

Kommt es durch einen Defekt zu einem Ausfall der Druckmittelversorgung des Bremsdrucksteuerventils 1 durch den Druckspeicher 33 oder die Pumpe 34, so kann mit Hilfe des Betätigungskolbens 9 ein Druckaufbau im Bremskreis 36 bewirkt werden. Hierzu wird der Betätigungskolben 9 über die zur Öffnung der Hochdruckventils 29 erforderliche Stellung hinaus in Betätigungsrichtung verschoben, wobei er an dem Trennkolben 26 zur Anlage kommt und diesen gegen die Kraft der Druckfeder 39 ebenfalls verschiebt. Das beim Eindringen des Betätigungskolbens 9 in die Auslaßkammer 31 von diesem verdrängte Druckmittelvolumen kann aufgrund der Sperrwirkung des Rückschlagventils 32 nur in den Bremskreis 36 gelangen und bewirkt dort den Aufbau eines zur Betätigung der Bremse ausreichenden Bremsdrucks. Die Verschiebung des Trennkolbens 26 ist für diesen Vorgang unbeachtlich, da das Hochdruckventil 29 ständig offengehalten wird und die Einlaßkammer 30 mit der Auslaßkammer 31 verbindet.

### Bezugszeichenliste:

- 1: Bremsdrucksteuervorrichtung
- 2: Gehäuse
- 3: Befestigungsflansch
- 4: Gewindebolzen
- 5: Zylinderbohrung
- 6: Zylinderbohrung
- 7: Wandabschnitt
- 8: Bohrung
- 9: Betätigungskolben
- 10: Kolbenstufe
- 11: Ansatz
- 12: Betätigungsstange
- 13: Druckfeder
- 14: Anschlagring
- 15: Elektromagnet
- 16: Längsbohrung
- 17: Ventilkolben
- 18: Ventilstößel
- 19: Niederdruckventil
- 20: Ringnut
- 21: Radialbohrung
- 22: Niederdruckanschluß
- 23: Reservoir
- 24: Druckfeder
- 25: Kanal
- 26: Trennkolben
- 27: Anschlagscheibe
- 28: Kopf
- 29: Hochdruckventil
- 30: Einlaßkammer
- 31: Auslaßkammer
- 32: Rückschlagventil
- 33: Druckspeicher
- 34: Pumpe
- 35: Druckminderventil
- 36: Bremskreis
- 37: Druckmittelauslaß
- 38: Deckel
- 39: Druckfeder
- 40: Sicherungsring

## Patentansprüche

1. Bremsdrucksteuervorrichtung für eine hydraulische Fahrzeugbremsanlage mit einer durch ein Bremspedal betätigbaren Ventilanordnung (19, 29), durch die ein Druckmittelauslaß zum Anschließen eines Bremskreises (36) wechselweise entweder mit einem Reservoir (23) oder mit einer Druckquelle (33) verbindbar ist, dadurch **gekennzeichnet**, daß die Ventilanordnung (19, 29), wenn das Bremspedal in der Betätigungsstellung ist, durch eine elektromagnetische Stellvorrichtung (15,17) in eine Stellung bewegbar ist, in der der Druckmittelanschluß (37) mit dem Reservoir (23) verbunden ist.

2. Bremsdrucksteuervorrichtung nach Anspruch 1, dadurch gekennzeichnet, daß zwischen der Ventilanordnung (19, 29) und dem Bremspedal eine Feder (24) zur Übertragung der Ventilbetätigungskraft angeordnet ist und daß die Feder (24) durch die elektromagnetische Stellvorrichtung über das Maß der Ventilbetätigungskraft hinaus spannbar ist.

3. Bremsdrucksteuervorrichtung nach einem der vorhergehenden Ansprüche, dadurch gekennzeichnet, daß das Bremspedal mit einem aus dem Gehäuse (2) der Bremsdrucksteuervorrichtung (1) herausragenden Betätigungskolben (9) verbunden ist, der in einer Bohrung (16) einen über eine Druckfeder (24) am Betätigungskolben (9) abgestützten Ventilkolben (17) der Ventilanordnung (19, 29) enthält und daß der Betätigungskolben (9) von einem Elektromagneten (15) umgeben ist, durch den der Ventilkolben (17) gegen die Druckfeder (24) bewegbar ist.

4. Bremsdrucksteuervorrichtung nach Anspruch 4, dadurch gekennzeichnet, daß der Betätigungskolben (9) in einen mit dem Druckmittelauslaß (37) verbundenen Druckraum hineinbewegbar ist, der über ein in Richtung auf die Druckquelle (33, 34) sperrendes Rückschlagventil (32) mit der Druckquelle (33, 34) verbunden ist.

5. Bremsdrucksteuervorrichtung nach einem der vorhergehenden Ansprüche, dadurch gekennzeichnet, daß das die Druckmittelzufuhr zum Druckmittelauslaß (37) ermöglichende Hochdruckventil (29) der Ventilanordnung (19, 29) in einem Trennkolben (26) angeordnet ist, der durch eine Druckfeder (39) in einer dem Betätigungskolben (9) benachbarten Endstellung gehalten wird und bei geöffnetem Hochdruckventil (29) gemeinsam mit dem Betätigungskolben (9) in den Druckraum bewegbar ist.

6. Bremsdrucksteuervorrichtung nach einem der vorhergehenden Ansprüche, dadurch gekennzeichnet, daß der Ventilkolben (17) der Ventilanordnung (19, 29) druckausgeglichen ist.

## Claims

1. A brake pressure control device for a hydraulic vehicle brake unit with a valve arrangement (19, 29), actuatable by a brake pedal, by means of which a pressure fluid outlet connected to a brake circuit (36) is connectible alternately either to a reservoir (23) or to a pressure source (33),
**characterized** in that, when the brake pedal has adopted its actuating position, the valve arrangement (19, 29) is movable by an electromagnetic adjusting device (15, 17) into a position in which the pressure fluid connection (37) is connected to the reservoir (23).

2. A brake pressure control device as claimed in claim 1,
**characterized** in that, between the valve arrangement (19, 29) and the brake pedal, a spring (24) is positioned for the transmission of the valve actuating force, and in that the spring (24) is compressible by the electromagnetic adjusting device in excess of the amount of the valve actuating force.

3. A brake pressure control device as claimed in anyone of the preceding claims,
**characterized** in that the brake pedal is connected to an actuating piston (9) which projects out of the housing (2) of the brake pressure control device (1) and contains within a bore (16) a valve piston (17) of the valve arrangement (19, 29), taking support at the actuating piston (9) through a compression spring (24), and in that the actuating piston (9) is surrounded by an electromagnet (15), by which the valve piston (17) is movable in opposition to the compression spring (24).

4. A brake pressure control device as claimed in claim 4,
**characterized** in that the actuating piston (9) is movable into a pressure chamber which is connected to the hydraulic fluid outlet (37) and to the pressure source (33, 34) through a non-return valve (32) shutting off in the direction of the pressure source (33, 34).

5. A brake pressure control device as claimed in anyone of the preceding claims,
**characterized** in that the high-pressure valve (29) of the valve arrangement (19, 29), permitting the supply of pressure fluid to the pressure fluid outlet (37), is positioned within a separating piston (26) which is maintained by a compression spring (39) in a final position adjacent to the actuating piston (9) and which is movable into the pressure chamber together with the actuating piston (9) when the high-pressure valve (29) is open.

6. A brake pressure control device as claimed in anyone of the preceding claims,
**characterized** in that the valve piston (17) of the valve arrangement (19, 29) is pressure-balanced.

## Revendications

1. Dispositif de commande de pression de freinage, pour système hydraulique de freinage pour véhicule automobile, comprenant un agencement de valve (19, 29) qui est agencé de façon à pouvoir être actionné au moyen d'une pédale de frein et au moyen duquel une sortie d'agent de pression servant au raccordement d'un circuit de frein (36) peut communiquer d'une manière alternée soit avec un réservoir (23), soit avec une source de pression (33), caractérisé en ce que l'agencement de valves (19, 29) est agencé de façon à pouvoir être déplacé au moyen d'un dispositif électromagnétique de réglage de position (15, 17), lorsque la pédale de frein est dans la position d'actionnement, à une position dans laquelle le raccord d'agent de pression (37) communique avec le réservoir (23).

2. Dispositif de commande de pression de freinage selon la revendication 1, caractérisé en ce qu'un ressort (24) servant à transmettre la force d'actionnement de valve est disposé entre l'agencement de valve (19, 29) et la pédale de frein et en ce qu'au moyen du dispositif électromagnétique de réglage de position, le ressort (24) peut être mis sous tension à une valeur excédant celle de la force d'actionnement de valve.

3. Dispositif de commande de pression de freinage selon l'une des revendications précédentes, caractérisé en ce que la pédale de frein est reliée à un piston d'actionnement (9) qui fait saillie hors du boîtier (2) du dispositif de commande de pression de freinage (1) et qui contient, dans un alésage (16), un piston de valve (17) de l'agencement de valve (19, 29) qui est appliqué en appui sur le piston d'actionnement (9) au moyen d'un ressort de compression (24), et en ce que le piston d'actionnement (9) est entouré d'un électro-aimant (15) au moyen duquel le piston de valve (17) peut être déplacé vers le ressort de compression (24).

4. Dispositif de commande de pression de freinage selon la revendication 3, caractérisé en ce que le piston d'actionnement (9) est agencé de façon à pouvoir être déplacé dans un sens et dans l'autre dans une chambre de pression qui communique avec la sortie d'agent de pression (37) et communique avec la source de pression (33, 34) par l'intermédiaire d'une valve antiretour (32) bloquant en direction de la source de pression (33, 34).

5. Dispositif de commande de pression de freinage selon l'une des revendications précédentes, caractérisé en ce que la valve de haute pression (29) de l'agencement de valve (19, 29) qui permet d'amener l'agent de pression à la sortie d'agent de pression (37) est disposée dans un piston de séparation (26) qui est maintenu par un ressort de compression (39) dans une position extrême voisine du piston d'actionnement (9) et qui est agencé de façon à pouvoir être déplacé dans la chambre de pression en commun avec le piston d'actionnement (9).

6. Dispositif de commande de pression de freinage seuil l'une des revendications précédentes, caractérisé en ce que le piston de valve (17) de l'agencement de valve (19, 29) est équilibré à la pression.
